# EUROPÄISCHE PATENTSCHRIFT

(11) **EP 1 611 651 B1**
(45) Veröffentlichungstag und Bekanntmachung des Hinweises auf die Patenterteilung: **16.08.2006**
(21) Anmeldenummer: 04722546.1
(22) Anmeldetag: 23.03.2004
(51) Int. Cl.: H02B 1/21

(54) **INSTALLATIONSGERÄT FÜR SAMMELSCHIENEN**
INSTALLATION DEVICE FOR BUS BARS
APPAREIL D' INSTALLATION POUR DES BARRES OMNIBUS

(30) Priorität: 04.04.2003 DE 10315503; 04.04.2003 DE 20305507 U
(43) Veröffentlichungstag der Anmeldung: 04.01.2006
(73) Patentinhaber: Bruchmann, Klaus, D-96450 Coburg (DE)
(72) Erfinder: Bruchmann, Klaus, D-96450 Coburg (DE)
(74) Vertreter: Appelt, Christian W.
(86) Internationale Anmeldenummer: PCT/EP2004/003074
(87) Internationale Veröffentlichungsnummer: WO 2004/088803

(56) Entgegenhaltungen:
- EP-A- 1 246 332
- DE-C- 3 940 154
- DE-C- 4 329 428

## Beschreibung

Die vorliegende Erfindung betrifft ein Installationsgerät für Sammelschienen, das auch für Sammelschienen unterschiedlicher Breite geeignet ist.

Installationsgeräte für Sammelschienen sind in unterschiedlichen Ausführungsformen bekannt, wobei solche Installationsgeräte mit Hakenteilen an Sammelschienen einhängbar und befestigbar sind. Um zu ermöglichen, daß solche Installationsgeräte an Sammelschienen unterschiedlicher Breite befestigt werden können, ist es bekannt, ein federbelastetes Verriegelungselement vorzusehen, das in einer Längsrichtung zwischen verschiedenen Befestigungspositionen verschiebbar ausgebildet und mit Halteabsätzen versehen ist, die so ausgelegt sind, daß sie in den entsprechenden Befestigungspositionen die jeweils verwendeten Sammelschienen in unterschiedlichen Breiten hintergreifen und damit das Installationsgerät an der jeweiligen Sammelschiene befestigen. Ein solches Verriegelungselement ist beispielsweise aus der DE 39 40 154 C1 bekannt.

Ausgehend vom Stand der Technik ist es eine Aufgabe der vorliegenden Erfindung, ein Installationsgerät für Sammelschienen mit einem solchen Verriegelungselement zur Verfügung zu stellen, das geringe Raumerfordernisse, insbesondere in einer Bautiefe, gleichzeitig aber eine hohe Funktionssicherheit aufweist.

Diese Aufgabe wird durch ein Installationsgerät für Sammelschienen gemäß Anspruch 1 gelöst, die Ansprüche 2 bis 14 betreffen besonders vorteilhafte Ausführungsformen des erfindungsgemäßen Installationsgeräts.

Erfindungsgemäß umfaßt das Installationsgerät für Sammelschienen, das für Sammelschienen unterschiedlicher Breite geeignet ist, Hakenteile, mittels denen es an Sammelschienen einhängbar ist und die die Sammelschiene hintergreifen. Ferner umfaßt das Installationsgerät erfindungsgemäß mindestens zwei Verriegelungselemente mit Halteabsätzen zum Befestigen von Sammelschienen, wobei ein erstes Verriegelungselement mindestens einen Halteabsatz zum Befestigen einer Sammelschiene einer ersten Breite und mindestens ein zweites Verriegelungselement mit mindestens einem Halteabsatz zum Befestigen einer Sammelschiene einer zweiten Breite aufweisen, die von der ersten Breite abweicht, so daß mindestens zwei Sammelschienen unterschiedlicher Breite mittels der mindestens zwei Verriegelungselemente festgelegt werden können.

Da die als Schieber ausgebildeten Verriegelungselemente im wesentlichen linear zwischen verschiedenen Befestigungspositionen beweglich sind (diese Bewegungsrichtung wird im folgenden als z-Richtung bezeichnet), ist in dieser linearen Bewegungsrichtung bzw. z-Richtung erhöhter Raumbedarf erforderlich, innerhalb dessen sich das Verriegelungselement bewegen kann. Insbesondere aus Stabilitätsgründen und damit Funktionsgründen kann jedoch das Verriegelungselement nicht beliebig klein dimensioniert werden. Es muß insbesondere auch in seiner Ausdehnung in z-Richtung, also in Verschieberichtung, bestimmte minimale Abmessungen aufweisen, so daß gerade in z-Richtung durch diese minimalen Abmessungen und den maximalen Weg zwischen den verschiedenen Befestigungspositionen, der auch als "Hub" bezeichnet werden kann, für manche Anwendungen teilweise zu hohe Raumerfordernisse vorliegen. Dies ist insbesondere im Falle einer Vielzahl von Befestigungspositionen und damit erforderlichen Halteabsätzen von Bedeutung, also in den Fällen, in denen eine größere Anzahl unterschiedlicher Sammelschienen befestigbar sein sollen. Üblicherweise müssen die Installationsgeräte mindestens für Halteschienen mit drei unterschiedlichen Breiten vorgesehen sein, ein Regelfall sind jedoch fünf unterschiedliche Breiten von Sammelschienen, so daß der Hub relativ groß sein muß.

Durch das Vorsehen mindestens zweier Verriegelungselemente mit einer dadurch reduzierten Zahl von Halteabsätzen je Verriegelungselement, wobei jedes Verriegelungselement zur Befestigung von Sammelschienen unterschiedlicher Breite vorgesehen sein kann, so daß sich die mindestens zwei Verriegelungselemente in ihrer Funktion jeweils ergänzen, kann der erforderliche Hub deutlich gesenkt, häufig mindestens halbiert werden. Bevorzugt sind dabei keine "Überlappungen" vorgesehen, d. h. die mindestens zwei Verriegelungselemente weisen jeweils nur unterschiedliche Halteabsätze auf, in einigen Ausnahmefällen ist es jedoch auch möglich, daß zumindest ein bestimmter Halteabsatz in mehr als einem Verriegelungselement vorgesehen ist, so daß Sammelschienen einer bestimmten Breite durch beide Verriegelungselemente befestigt werden.

Aufgrund der üblichen Normierung der Sammelschienen sind bevorzugt zwei Verriegelungselemente mit insgesamt fünf unterschiedlichen Halteabsätzen für Sammelschienen mit fünf unterschiedlichen Breiten vorgesehen.

Bevorzugt wird die Anzahl der vorzusehenden unterschiedlichen Halteabsätze gleichmäßig auf die mindestens zwei Verriegelungselemente verteilt, so daß der erforderliche Hub ebenfalls gleichmäßig verteilt ist und die Gesamteinbautiefe verringert werden kann. Insbesondere bei zwei Verriegelungselementen und einer ungeraden Anzahl von Halteabsätzen ist es auch möglich, einen Halteabsatz für eine bestimmte Breite in beiden Verriegelungselementen vorzusehen, um beispielsweise eine besonders stabile Befestigung bei den voraussichtlich hauptsächlich verwendeten Sammelschienen sicherzustellen.

Ferner sind bei einer bevorzugten Ausführungsform die mindestens zwei Vorrichtungselemente so ausgebildet, daß die Halteabsätze gleichsam in aufsteigender Form an den jeweiligen Verriegelungsvorrichtungen angebracht sind, wobei ein erstes Verriegelungselement mit Halteabsätzen für Sammelschienen kleinerer Breite und ein zweites Verriegelungselement mit Halteabsätzen für Sammelschienen größerer Breite usw. vorgesehen sind.

Insbesondere bei einer höheren Anzahl von möglichen Breiten für Sammelschienen können auch mehr als zwei Verriegelungselemente, beispielsweise drei Verriegelungselemente, vorgesehen sein.

Bei einer bevorzugten Ausführungsform sind die mindestens zwei Verriegelungselemente im wesentlichen nebeneinander und insbesondere parallel zueinander angeordnet, es ist jedoch auch möglich, die Verriegelungselemente unabhängig voneinander anzuordnen.

Ein Installationsgerät wird üblicherweise auf einem Sammelschienensystem mit drei Sammelschienen aufgebracht, wobei die Sammelschienen eines Systems in der Regel gleiche Breiten aufweisen. Die mindestens zwei Verriegelungselemente werden bevorzugt lediglich für eine Sammelschiene des Sammelschienensystems vorgesehen, da damit bereits eine ausreichende Befestigung des Installationsgeräts an dem Sammelschienensystem sichergestellt ist. Es ist jedoch auch möglich, die Verriegelungselemente an zwei oder an mehreren Sammelschienen wiederholt anzubringen, um eine besondere Stabilität, falls für den besonderen Anwendungsfall gewünscht, zu ermöglichen.

Ferner ist es bei einer anderen Ausführungsform möglich, daß jedes der mindestens zwei Verriegelungselemente in unterschiedlichen Positionen des Installationsgeräts zur Befestigung an unterschiedlichen Sammelschienen des Sammelschienensystems vorgesehen ist. Bevorzugt wird jedoch, wie oben erläutert, ein "Satz" aus mindestens zwei Verriegelungselementen zur Wechselwirkung mit nur einer einzelnen Sammelschiene des Systems, die gemeinsam, entweder direkt benachbart oder auch mit Abstand voneinander angeordnet sind.

Die Verriegelungselemente sind bei einer bevorzugten Ausführungsform federbelastet, beispielsweise mittels eines Federelementes, zum Beispiel einer Spiralfeder, es ist jedoch auch möglich, auf andere Weise die Befestigung bzw. das Verklemmen der Sammelschiene mittels der Verriegelungselemente zu ermöglichen, beispielsweise mittels eines Elements zur Feststellung der Verriegelungselemente in einer bestimmten Befestigungsposition.

Das oder die Verriegelungselemente sind bevorzugt aus Kunststoff hergestellt, wobei bevorzugt Spritzgußteile verwendet werden, die einfach und kostengünstig herzustellen sind.

Gemäß einem auch eigenständig erfinderischen Aspekt ist mindestens ein Verriegelungselement einstückig mit einem Federelement ausgebildet, wobei bevorzugt das Verriegelungselement ein einstückiges, integrales Kunststoffelement mit einem Federelement ist, das beispielsweise im Spritzgußverfahren hergestellt wird.

Durch die einstückige, integrale Ausbildung des Verriegelungselements wird eine sehr kompakte und einfache Bauweise ermöglicht. Ferner wird durch diese Bauweise ein zusätzliches Federelement, wie es oben erwähnt ist, vermieden, so daß zum einen die Anzahl der notwendigen Bauteile verringert und damit sowohl die Herstellung als auch das Zusammensetzen des Systems vereinfacht werden und zum anderen zusätzlich die baulichen Dimensionen an die jeweiligen anwendungsabhängigen Anforderungen einfach angepaßt und insbesondere verringert werden können.

Insbesondere kann durch ein solches integral ausgebildetes Element die Breite der Verriegelungselemente verringert werden, so daß eine Kombination dieser beiden Aspekte eine sehr geringe Dimensionierung sowohl in der Breite als auch in der Tiefe (Hub) ermöglicht und ein besonderer kombinatorischer Effekt erzielt wird.

Bei einer bevorzugten Ausführungsform ist das Federelement eines solchen integralen Verriegelungselements mäanderförmig ausgebildet.

Grundsätzlich ist es möglich, daß jedes der mindestens zwei Verrieglungselemente mit einem eigenen Federelement unabhängig belastet ist, es ist jedoch auch möglich, ein gemeinsames Federelement, beispielsweise mit mehreren Federbeinen oder Federbügeln, für zwei oder mehr Verriegelungselemente vorzusehen, wodurch die Herstellungskosten verringert und der Aufbau des Systems vereinfacht wird.

Bei einer besonderen Ausführungsform umfassen die mindestens zwei Verriegelungselemente eine Nut für den Eingriff eines Werkzeuges zur manuellen Bewegung des Verriegelungselements in der linearen Richtung, z-Richtung, entgegen der Federkraft des oder der Federelemente. Dadurch kann der Benutzer das oder die Verriegelungselemente gegen die Federkraft des Federelements in z-Richtung bewegen, um das Installationsgerät von der Sammelschiene zu lösen.

Es ist selbstverständlich auch möglich, daß anstatt der Nut für den Eingriff eines Werkzeuges ein anderes Element vorgesehen ist, das beispielsweise auch mit der Hand ergriffen werden kann, um das Element im wesentlichen in z-Richtung zu bewegen oder ein Lösen von der Sammelschiene zu bewerkstelligen, wobei bevorzugt beispielsweise ein Griff vorgesehen sein kann.

Diese und weitere Merkmale und Vorteile der vorliegenden Erfindung werden anhand der beigefügten schematischen Zeichnungen noch deutlicher. Es zeigen:
- Fig. 1: eine teilweise geschnittene, perspektivische Darstellung einer Ausführungsform eines erfindungsgemäßen Installationsgerätes, das an einer ersten Sammelschiene befestigt ist;
- Fig. 2: eine teilweise geschnittene, perspektivische Darstellung einer Ausführungsform eines erfindungsgemäßen Installationsgerätes, das an einer zweiten Sammelschiene befestigt ist;
- Fig. 3: einen Schnitt durch eine Ausführungsform eines erfindungsgemäßen Installationsgeräts, das auf einer Sammelschiene aufgesetzt ist; und
- Fig. 4: eine weitere Ausführungsform eines Verriegelungselementes.

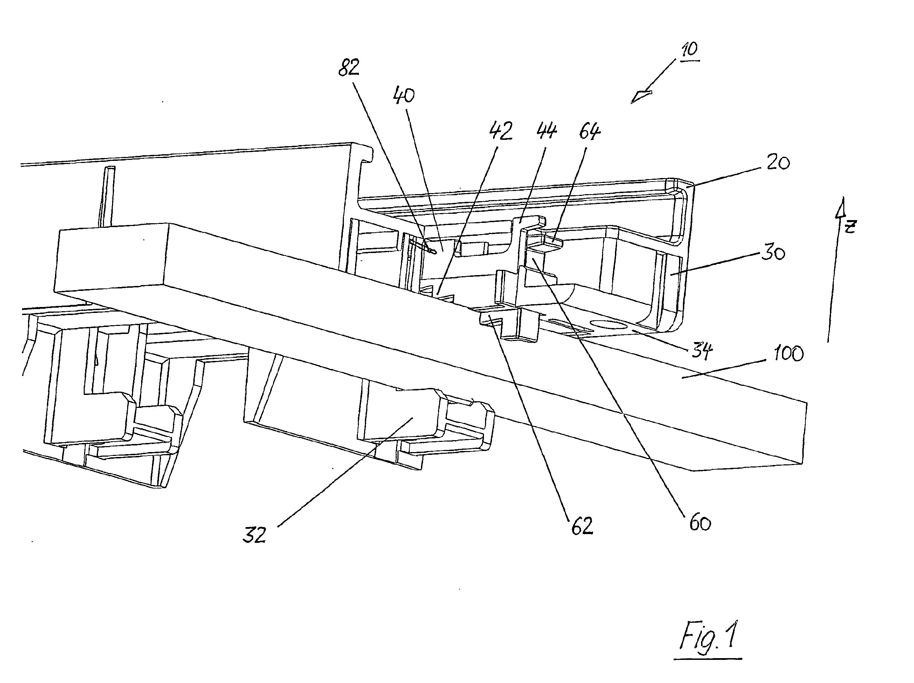

Figur 1 zeigt eine Ausführungsform eines erfindungsgemäßen Installationsgerätes 10 in perspektivischer Darstellung, wobei zur Verdeutlichung ein Teilbereich des Systems weggeschnitten worden ist.

Diese Ausführungsform des Installationsgeräts 10 besteht aus einer Grundplatte 20 und einem Adapterkontaktträger 30, der mit Hakenteilen 32 versehen ist, so daß eine erste Sammelschiene 100 zwischen einem Hakenteil 32 und einer unteren Seite 34 des Adapterkontaktträgers 30 eingesetzt und gehalten werden kann.

Das Installationsgerät 10 umfaßt ferner zwei Verriegelungselemente 40, 60, die jeweils mit Halteabsätzen 42 und 62 versehen sind, wobei bei dieser Ausführungsform das Verriegelungselement 40 mit Halteabsätzen 42 für Sammelschienen kleinerer Breite versehen ist, während das Verriegelungselement 60 mit den Halteabsätzen 62 für Sammelschienen 100 größerer Breite versehen ist.

Wie deutlich in Figur 1 ersichtlich ist, wird durch die Tatsache, daß das Verriegelungselement 40 keinen passenden Halteabsatz für die eingesetzte erste Sammelschiene 100 aufweist, dieses in z-Richtung nach oben verschoben, so daß der maximale Hub realisiert wird.

Das Verriegelungselement 60 hintergreift dagegen mit einem seiner Halteabsätze 62 die erste Sammelschiene 100, so daß das Installationsgerät 10 zuverlässig an der Sammelschiene 100 befestigt ist.

Ein Federelement, das bei dieser Ausführungsform einteilig ausgebildet ist und zwei Federbügel umfaßt, wobei je ein Federbügel auf das Verriegelungselement drückt, spannt dabei die Verriegelungselemente 40 und 60 in Figur 1 nach unten, also in Richtung auf die Sammelschiene 100, vor, so daß automatisch das "richtige" Verriegelungselement 60 für eine zuverlässige Befestigung an der Sammelschiene 100 ausgewählt wird. Der Benutzer braucht daher lediglich das Installationsgerät 10 auf das Sammelschienensystem mit Sammelschiene 100 aufzusetzen, ohne sich Gedanken darüber machen zu müssen, welche Sammelschienenbreite vorliegt. Der Übersichtlichkeit halber ist das Federelement in Figur 1 nicht dargestellt. Es ist lediglich ein ebenfalls teilweise geschnittener Bereich eines Federbügels 82 des bei dieser Ausführungsform einteilig ausgebildeten Federelements, der auf das Verriegelungselement 40 drückt, schematisch angedeutet.

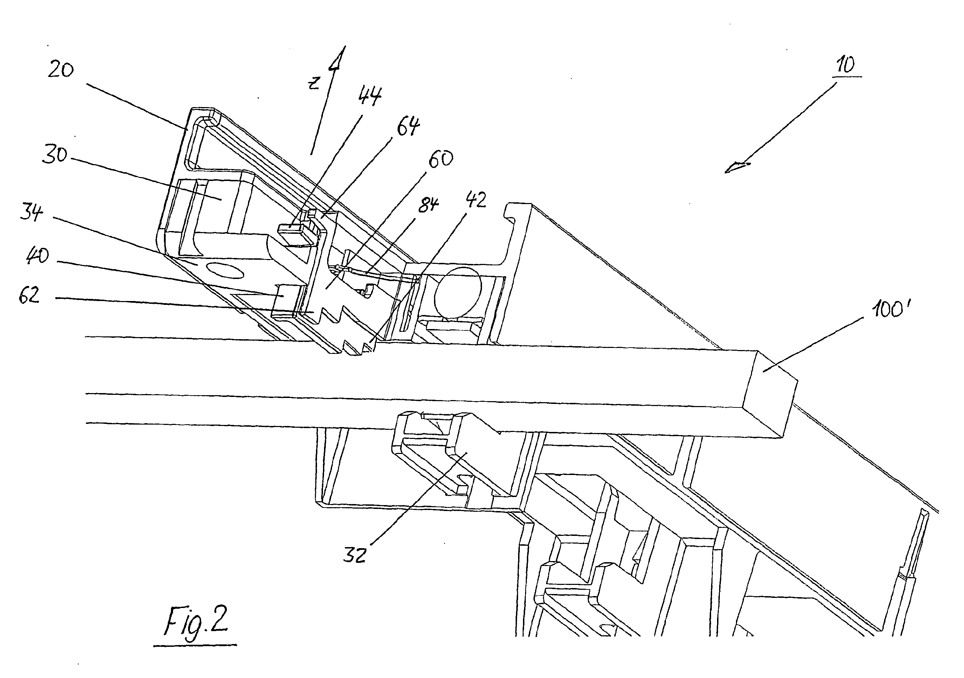

Figur 2 zeigt das in Figur 1 gezeigte Installationsgerät 10, das jedoch auf einer zweiten Sammelschiene 100' mit geringerer Breite aufgesetzt worden ist. Wie in Figur 2 deutlich ersichtlich ist, wird aufgrund der Sammelschiene 100', die eine geringere Breite als die Sammelschiene (100, Figur 1) aufweist, automatisch das Verriegelungselement 40 "aktiv", so daß die Sammelschiene 100 durch die untere Seite 34 des Adapterkontaktträgers 30, das Hakenteil 32 und einen Halteabsatz 42 des Verriegelungselements 40 vollständig umschlossen und das Installationsgerät 10 sicher und zuverlässig an dem Sammelschienensystem mit Sammelschiene 100' befestigt werden.

Das Verriegelungselement 60, das im Hinblick auf die Befestigung bzw. Sicherung der Sammelschiene 100' "nicht aktiv" ist, wird automatisch nach oben verschoben; die Halteabsätze 62 des Verriegelungselements 60, die für Sammelschienen größerer Breite ausgelegt sind, liegen daher nicht direkt an der Sammelschiene 100' an.

In dieser Ausführungsform ist ferner ein Federbein 84 des Federelements sichtbar, das auf eine obere Seite des Verriegelungselements 60 drückt, ein weiteres Federbein (82, siehe Figur 1) drückt auf das Verriegelungselement 40, so daß dieses ebenfalls in Richtung nach unten vorgespannt wird.

Es ist darauf hinzuweisen, daß das Sammelschienensystem aus mehreren Sammelschienen besteht, der Einfachheit halber ist jedoch in den Figuren jeweils nur eine Sammelschiene 100 bzw. 100' dargestellt. Ferner sind die Verriegelungselemente 40, 60 lediglich an einer Stelle des Installationsgerätes 10 vorgesehen , nicht jedoch an parallelen Stellen in der Nähe der anderen Hakenteile, da bereits durch das Vorsehen eines Satzes von Verriegelungselementen 40, 60 eine sichere Befestigung erzielt wird. Es ist jedoch auch möglich, Verriegelungselemente mehrfach an einem Installationsgerät anzubringen. Schließlich können die Verriegelungselemente an einer anderen Stelle des Installationsgeräts, beispielsweise in der Nähe eines mittleren Hakenteils, angeordnet werden.

Beide Verriegelungselemente 40, 60 weisen je ein Griffelement 44, 64 auf, mit dem das Verriegelungselement 40 oder 60 von Hand gegen die Kraft des Federelements in z-Richtung nach oben verschoben werden kann, um das entsprechende Verriegelungselement 40 oder 60 und damit das Installationsgerät 10 von der Sammelschiene 100 bzw. 100' zu lösen.

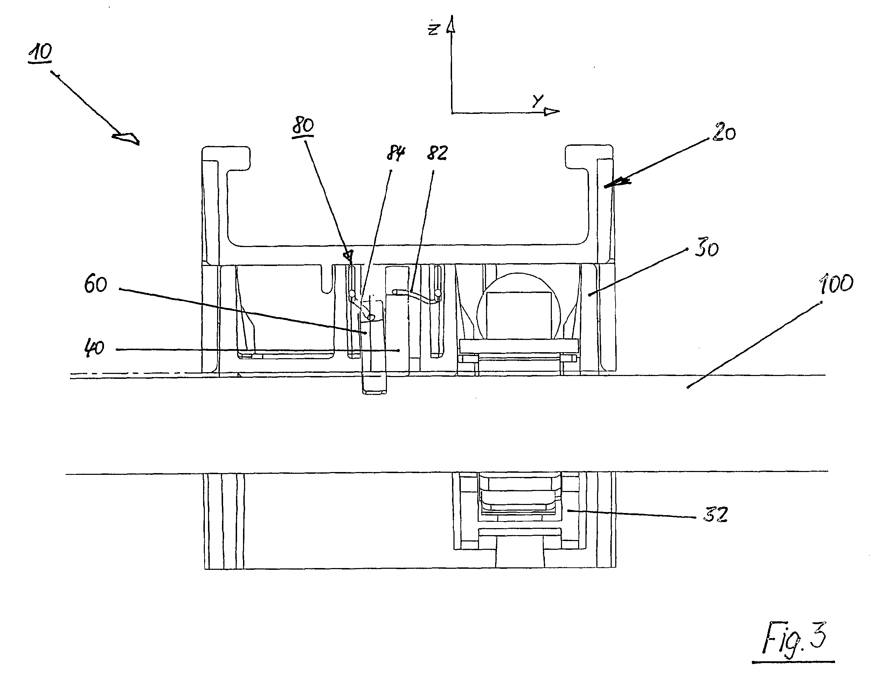

Figur 3 zeigt eine teilweise geschnittene Draufsicht auf eine weitere Ausführungsform eines Installationsgeräts 10, das im wesentlichen der in den Figuren 1 und 2 gezeigten Ausführung entspricht, so daß auf die entsprechende Beschreibung verwiesen wird. Die in Figur 3 dargestellte Ausführungsform des Installationsgerätes 10 ist auf einer Sammelschiene 100 größerer Breite aufgesetzt, wie es auch in Figur 1 gezeigt ist, so daß die Sammelschiene 100 von dem Verriegelungselement 60 hintergriffen wird.

Deutlich sichtbar sind in Figur 3 auch die Positionen der beiden Verriegelungselemente 40 und 60 sowie das Federelement 80 mit zwei Federbeinen 82 und 84, die die beiden Verriegelungselemente 40 und 60 in Figur 3 nach unten, also in Richtung auf die Sammelschiene 100, vorspannen. Deutlich ersichtlich ist bei dieser Ausführungsform auch, daß das Hakenteil 32 im Hinblick auf die Verriegelungselemente 40 und 60 seitlich (in y-Richtung) versetzt ist. Es ist jedoch bei einer anderen Ausführungsform auch möglich, daß Verriegelungselemente und Hakenteil auf etwa gleicher Höhe liegen.

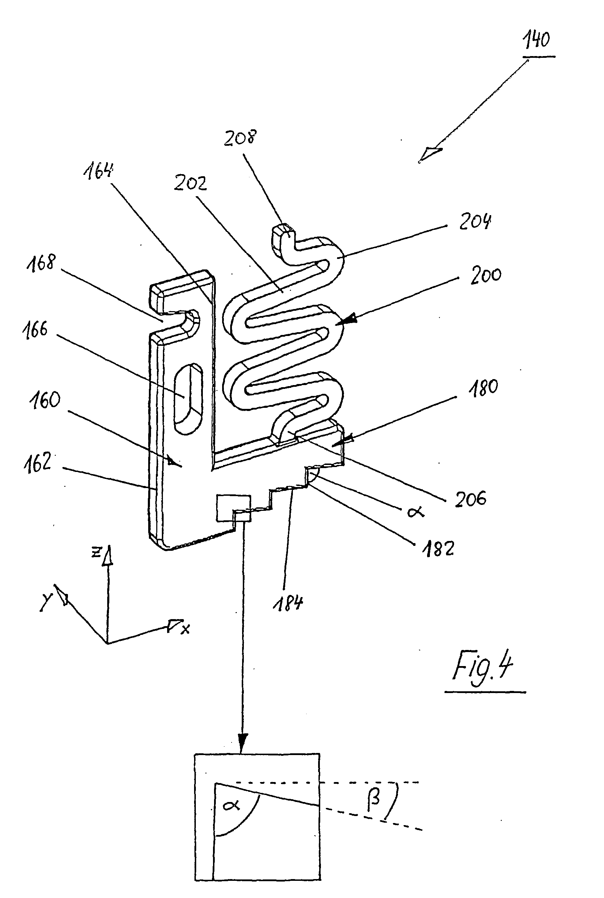

Figur 4 zeigt schematisch eine perspektivische Darstellung einer besonderen Ausführungsform eines Verriegelungselements 140, das als Spritzgußteil aus Kunststoff hergestellt ist und in ein erfindungsgemäßen Installationsgerät einsetzbar ist. Das Verriegelungselement 140 umfaßt ein im wesentlichen rechteckiges bzw. balkenförmiges Führungselement 160 mit zwei Führungskanten 162 und 164, an das sich ein Befestigungselement 180 mit Halteabsätzen anschließt, die durch vertikale Stufenkanten 182 und im wesentlichen horizontale Stufenkanten 184 gebildet werden, wobei sich das Befestigungselement 180 im wesentlichen in einem rechten Winkel von dem Führungselement 160 erstreckt.

An dem Befestigungselement 180 ist ein Federelement 200 befestigt, das im wesentlichen mäanderförmig ausgebildet und aus geradlinigen Verbindungselementen 202 und Krümmungselementen 204 aufgebaut ist.

Das Federelement 200 ist an einem Anschlußelement 206 im wesentlichen in einer x-Richtung in der Mitte der Erstreckung des Befestigungselements 180 angebracht.

An der gegenüberliegenden Seite weist das Federelement 200 ein Kontaktelement 208 auf, das bei erfindungsgemäßem Einsatz in einem Installationsgerät an einem Gegenelement anstößt, so daß das Federelement 200 in z-Richtung und damit in der beabsichtigten Führungsrichtung des Verriegelungselements 140 parallel zu den Führungskanten 164 und 166 vorgespannt werden kann.

Das Befestigungselement 180 umfaßt mehrere vertikale Stufenkanten 182 und im wesentlichen horizontale Stufenkanten 184, die zusammen stufenförmige Halteabsätze bilden. Es ist möglich, daß die vertikalen Stufenkanten vertikal, also in z-Richtung, verlaufen, während die horizontalen Kanten exakt in horizontaler Richtung, also in x-Richtung, verlaufen, so daß sie einen Innenwinkel von ca. 90° bilden. Bei der gezeigten Ausführungsform sind jedoch die horizontalen Stufenkanten 180 gegenüber der x-Richtung leicht geneigt, so daß eine vertikale Stufenkante 182 und eine horizontale Stufenkante 184 einen Winkel α bilden, der um einen Winkel β kleiner ist als 90°. Bei der gezeigten Ausführungsform weist der Winkel α eine Größe von ca. 85° auf

Das Führungselement 160 weist in einem Mittenbereich eine längliche Ausnehmung 166, auch Führungsausnehmung genannt, auf, die der Aufnahme eines zugehörigen Führungsbolzens eines Installationsgerätes dient.

Ferner hat das Führungselement 162 eine Nut 168, in die mit einem Werkzeug, beispielsweise einem Schraubenzieher, eingegriffen werden kann, um das Verriegelungselement 140 in z-Richtung gegen die Kraft des Federelements 200 nach oben zu bewegen und das Verriegelungselement bzw. das Installationselement von den Sammelschienen zu lösen.

Das in Figur 4 gezeigte Verriegelungselement weist insgesamt drei Halteabsätze auf, selbstverständlich ist es aber möglich, auch eine andere Anzahl von Halteabsätzen vorzusehen. Bei einem erfindungsgemäßen Installationsgerät würden, wie oben erläutert, mindestens zwei solcher Verriegelungselemente eingesetzt werden, die jeweils mit Halteabsätzen für unterschiedliche Sammelschienen versehen sind.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Installationsgerät
- 20: Grundplatte
- 30: Adapterkontaktträger
- 32: Hakenteil
- 34: untere Seite (Adapterkontaktträger 32)
- 40: Verriegelungselement
- 42: Halteabsätze
- 44: Griffelement
- 60: Verriegelungselement
- 62: Halteabsätze
- 64: Griffelement
- 80: Federelement
- 82, 84: Federbügel
- 100, 100': Sammelschiene
- 140: Verriegelungselement
- 160: Führungselement
- 162,164: Führungskanten
- 166: Ausnehmung
- 168: Nut
- 180: Befestigungselement
- 182: vertikale Stufenkante
- 184: horizontal Stufenkante
- 200: Federelement
- 202: geradliniges Verbindungelement
- 204: Krümmungselement
- 206: Anschlußelement
- 208: Kontaktelement

## Patentansprüche

1. Installationsgerät für Sammelschienen, das mittels Hakenteilen (32) an Sammelschienen einhängbar ist und das mindestens zwei Verriegelungselemente (40, 60) aufweist, die mit Halteabsätzen (42, 62) zum Befestigen von Sammelschienen (100, 100') unterschiedlicher Breite vorgesehen sind und die mit einem jeweiligen Hakenteil zusammenwirken, wobei die mindestens zwei Verriegelungselemente (40, 60) als Schieber ausgebildet und im wesentlichen linear zwischen verschiedenen Befestigungspositionen beweglich an dem Installationsgerät (10) befestigt sind, wobei ein erstes Verriegelungselement (40) mindestens einen Halteabsatz (42) zum Befestigen einer Sammelschiene (100') einer ersten Breite aufweist und mindestens ein zweites Verriegelungselement (60) mindestens einen Halteabsatz (62) zum Befestigen einer Sammelschiene (100) einer zweiten Breite aufweist, die von der ersten Breite abweicht, wobei der Halteabsatz (42) zum Befestigen einer Sammelschiene (100') der ersten Breite ausschließlich an dem ersten Verriegelungselement (40) vorgesehen und der Halteabsatz (42) zum Befestigen einer Sammelschiene (100) einer zweiten Breite ausschließlich an dem zweiten Verriegelungselement (60) vorgesehen ist.

2. Installationsgerät nach Anspruch 1, **dadurch gekennzeichnet, daß** zwei Verriegelungselemente (40, 60) mit insgesamt fünf unterschiedlichen Halteabsätzen (42, 62) für Sammelschienen (100, 100') mit insgesamt fünf unterschiedlichen Breiten vorgesehen sind.

3. Installationsgerät nach Anspruch 1 oder 2, **dadurch gekennzeichnet, daß** ein erstes Verriegelungselement (40) mit Halteabsätzen (42) für Sammelschienen erster Breiten (100') und ein zweites Verriegelungselement (60) mit Halteabsätzen (62) für Sammelschienen (100) zweiter Breiten vorgesehen sind, wobei alle ersten Breiten kleiner als die zweiten Breiten sind.

4. Installationsgerät nach einem der vorhergehenden Ansprüche, **dadurch gekennzeichnet, daß** drei Verriegelungselemente mit unterschiedlichen Halteabsätzen für Sammelschienen unterschiedlicher Breiten vorgesehen sind.

5. Installationsgerät nach einem der vorhergehenden Ansprüche, **dadurch gekennzeichnet, daß** die mindestens zwei Verriegelungelemente (40, 60) parallel zueinander angeordnet sind.

6. Installationsgerät nach einem der vorhergehenden Ansprüche, **dadurch gekennzeichnet, daß** die mindestens zwei Verriegelungselemente (40, 60) federbelastet sind.

7. Installationsgerät nach einem der vorhergehenden Ansprüche, **dadurch gekennzeichnet, daß** mindestens eines der mindestens zwei Verriegelungselemente (40, 60) ein Kunststoselement ist.

8. Installationsgerät nach einem der vorhergehenden Ansprüche, **dadurch gekennzeichnet, daß** mindestens eines der mindestens zwei Verriegelungselemente (40, 60) einstückig mit einem Federelement ausgebildet ist.

9. Installationsgerät nach Anspruch 8, **dadurch gekennzeichnet, daß** das Federelement mäanderförmig ausgebildet ist.

10. Installationsgerät nach einem der vorhergehenden Ansprüche, **dadurch gekennzeichnet, daß** mindestens eines der Verriegelungselemente (40, 60) eine längliche Ausnehmung zur Aufnahme eines Führungsbolzens umfaßt.

11. Installationsgerät nach einem der vorhergehenden Ansprüche, **dadurch gekennzeichnet, daß** mindestens eines der Verriegelungselemente eine Nut für den Eingriff eines Werkzeuges oder ein Griffelement (34, 64) zum Bewegen des Verriegelungselements (40, 60) in einer Richtung (z-Richtung) entgegen der Federkraft eines Federelements (80) umfaßt.

12. Installationsgerät nach einem der vorhergehenden Ansprüche, **dadurch gekennzeichnet, daß** mindestens eines der Verriegelungselemente (40, 60) eine Rastzunge zum Verrasten des Verriegelungselements in dem Installationsgerät (10) umfaßt.

13. Installationsgerät nach einem der vorhergehenden Ansprüche, **dadurch gekennzeichnet, daß** die Halteabsätze (42, 62) der Verriegelungselemente (40, 60) stufenförmig ausgebildet sind.

14. Installationsgerät nach Anspruch 13, **dadurch gekennzeichnet, daß** ein Innenwinkel α einer Stufe eines Halteabsatzes kleiner als 90° ist.

## Claims

1. Installation device for busbars, which can be suspended on busbars by means of hook parts (32) and which has at least two latching elements (40, 60), which are provided with retaining shoulders (42, 62) for the purpose of fixing busbars (100, 100') of different widths and interact with a respective hook part, the at least two latching elements (40, 60) being in the form of slides and being fixed to the installation device (10) such that they can move essentially linearly between different fixing positions, a first latching element (40) having at least one retaining shoulder (42) for the purpose of fixing a busbar (100') having a first width, and at least one second latching element (60) having at least one retaining shoulder (62) for the purpose of fixing a busbar (100) having a second width, which is different from the first width, the retaining shoulder (42) for the purpose of fixing a busbar (100') having the first width being provided exclusively on the first latching element (40), and the retaining shoulder (62) for the purpose of fixing a busbar (100) having a second width being provided exclusively on the second latching element (60).

2. Installation device according to Claim 1, **characterized in that** two latching elements (40, 60) having in total five different retaining shoulders (42, 62) for busbars (100, 100') having in total five different widths are provided.

3. Installation device according to Claim 1 or 2, **characterized in that** a first latching element (40) having retaining shoulders (42) for busbars having first widths (100') and a second latching element (60) having retaining shoulders (62) for busbars (100) having second widths are provided, all of the first widths being smaller than the second widths.

4. Installation device according to one of the preceding claims, **characterized in that** three latching elements having different retaining shoulders for busbars having different widths are provided.

5. Installation device according to one of the preceding claims, **characterized in that** the at least two latching elements (40, 60) are arranged parallel to one another.

6. Installation device according to one of the preceding claims, **characterized in that** the at least two latching elements (40, 60) are spring-loaded.

7. Installation device according to one of the preceding claims, **characterized in that** at least one of the at least two latching elements (40, 60) is a plastic element.

8. Installation device according to one of the preceding claims, **characterized in that** at least one of the at least two latching elements (40, 60) is designed to be integral with a spring element.

9. Installation device according to Claim 8, **characterized in that** the spring element is of meandering design.

10. Installation device according to one of the preceding claims, **characterized in that** at least one of the latching elements (40, 60) comprises an elongate cutout for the purpose of receiving a guide bolt.

11. Installation device according to one of the preceding claims, **characterized in that** at least one of the latching elements comprises a groove for the engagement of a tool or a grip element (34, 64) for the purpose of moving the latching element (40, 60) in a direction (z direction) counter to the spring force of a spring element (80).

12. Installation device according to one of the preceding claims, **characterized in that** at least one of the latching elements (40, 60) comprises a latching tongue for the purpose of latching the latching element in the installation device (10).

13. Installation device according to one of the preceding claims, **characterized in that** the retaining shoulders (42, 62) of the latching elements (40, 60) are of stepped design.

14. Installation device according to Claim 13, **characterized in that** an internal angle α of a step of a retaining shoulder is less than 90°.

## Revendications

1. Appareil d'installation pour des barres omnibus, susceptible d'être accroché sur des barres omnibus à l'aide de parties en crochets (32), et qui présente au moins deux éléments de verrouillage (40, 60), qui sont prévus avec des décrochements de maintien (42, 62) pour la fixation de barres omnibus (100, 100') de largeurs différentes et qui coopèrent avec une partie en crochet respective, les au moins deux éléments de verrouillage (40 ;60) étant réalisés sous la forme de coulisseaux et étant fixés de façon sensiblement linéaire sur l'appareil d'installation (10), en étant mobile entre deux positions de fixation différente, où un premier élément de verrouillage (40) présente au moins un décrochement de maintien (42), pour la fixation sur une barre omnibus (100') d'une première largeur, et au moins un deuxième élément de verrouillage (60) présente au moins un décrochement de maintien (62), pour la fixation d'une barre omnibus (100) d'une deuxième largeur, différente de la première largeur, le décrochement de maintien (42), pour la fixation d'une barre omnibus (100') de la première largeur, étant prévu exclusivement sur le premier élément de verrouillage (40), et le décrochement de maintien (42), pour la fixation d'une barre omnibus (100) d'une deuxième largeur, étant prévu exclusivement sur le deuxième élément de verrouillage (60).

2. Appareil d'installation selon la revendication 1, **caractérisé en ce que** deux éléments de verrouillage (40, 60), ayant un total de cinq décrochements de maintien (42, 62) différents pour des barres omnibus (100, 100') ayant un total de cinq largeurs différentes, sont prévues.

3. Appareil d'installation selon la revendication 1 ou 2, **caractérisé en ce qu'**un premier élément de verrouillage (40) avec des décrochements de maintien (42) pour des barres collectrices de première largeur (100') et un deuxième élément de verrouillage (60) avec des décrochements de maintien (62) pour des barres omnibus (100) de deuxièmes largeurs sont prévues, toutes les premières largeurs étant inférieures aux deuxièmes largeurs.

4. Appareil d'installation selon l'une des revendications précédentes, **caractérisé en ce que** trois éléments de verrouillage, ayant des décrochements de maintien différents pour des barres omnibus de largeurs différentes, sont prévues.

5. Appareil d'installation selon l'une des revendications précédentes, **caractérisé en ce que** les au moins deux éléments de verrouillage (40, 60) sont disposés parallèlement les uns aux autres.

6. Appareil d'installation selon l'une des revendications précédentes, **caractérisé en ce que** les au moins deux éléments de verrouillage (40, 60) sont sollicités élastiquement.

7. Appareil d'installation selon l'une des revendications précédentes, **caractérisé en ce qu'**au moins l'un des au moins deux éléments de verrouillage (40, 60) est un élément en matière synthétique.

8. Appareil d'installation selon l'une des revendications précédentes, **caractérisé en ce qu'**au moins l'un des au moins deux éléments de verrouillage (40, 60) est réalisé d'une seule pièce avec un élément élastique.

9. Appareil d'installation selon la revendication 8, **caractérisé en ce que** l'élément élastique est réalisé en forme de méandre.

10. Appareil d'installation selon l'une des revendications précédentes, **caractérisé en ce qu'**au moins l'un des éléments de verrouillage (40, 60) comprend un évidement allongé, pour recevoir un boulon de guidage.

11. Appareil d'installation selon l'une des revendications précédentes, **caractérisé en ce qu'**au moins l'un des éléments de verrouillage comprend une rainure pour l'engagement d'un outil ou d'un élément de saisie (34, 64), pour le déplacement de l'élément de verrouillage (40, 60) dans une direction (direction z), à l'encontre de la force élastique provenant d'un élément élastique (80).

12. Appareil d'installation selon l'une des revendications précédentes, **caractérisé en ce qu'**au moins l'un des éléments de verrouillage (40, 60) comprend une languette d'encliquetage, pour encliquetage de l'élément de verrouillage dans l'appareil d'installation (10).

13. Appareil d'installation selon l'une des revendications précédentes, **caractérisé en ce que** les décrochements de maintien (42, 62) des éléments de verrouillage (40, 60) sont conformés en gradins.

14. Appareil d'installation selon la revendication 13, **caractérisé en ce qu'**un angle intérieur α d'un gradin d'un décrochement de maintien est inférieur à 90°.
